# EUROPÄISCHE PATENTSCHRIFT

(11) **EP 3 720 650 B1**
(45) Veröffentlichungstag und Bekanntmachung des Hinweises auf die Patenterteilung: **03.04.2024**
(21) Anmeldenummer: 18800470.9
(22) Anmeldetag: 08.11.2018
(51) Int. Cl.: B23P 21/00, B23Q 37/00

(54) **ANLAGE, AUFWEISEND EIN GEBÄUDE MIT HALLENBODEN**
FACILITY, HAVING A BUILDING WITH A HALL FLOOR
INSTALLATION COMPORTANT UN BÂTIMENT ÉQUIPÉ D'UN SOL DE HALL

(30) Priorität: 05.12.2017 DE 102017011198
(43) Veröffentlichungstag der Anmeldung: 14.10.2020
(73) Patentinhaber: SEW-EURODRIVE GmbH & Co. KG, 76646 Bruchsal (DE)
(72) Erfinder: SCHMIDT, Josef, 76676 Graben-Neudorf (DE); SCHÖNUNG, Frank, 76676 Graben-Neudorf (DE); WEIS, Patrick, 75045 Wössingen (DE); WALZ, Tanja, 75045 Walzbachtal (DE); ANGST, Michael, 76187 Karlsruhe (DE); FUCHS, Alexander, 76646 Bruchsal (DE)
(86) Internationale Anmeldenummer: PCT/EP2018/025286
(87) Internationale Veröffentlichungsnummer: WO 2019/110142

(56) Entgegenhaltungen:
- WO-A1-2017/182132
- CN-A- 106 625 210
- DE-A1-102011 014 887
- DE-A1-102011 109 531
- DE-A1-102014 017 544
- DE-A1-102015 016 682
- DE-A1-102016 003 665
- DE-U1- 29 817 895
- DE-U1-212005 000 023
- JP-A- H0 711 840
- US-A1- 2002 170 885

## Beschreibung

Die Erfindung betrifft eine Anlage, aufweisend ein Gebäude mit Hallenboden gemäß dem Oberbegriff des Anspruchs 1.

Es ist allgemein bekannt, dass zur Fertigung eines Produktes Material in einem Regal bereitgehalten wird und das Produkt auf einem Arbeitstisch hergestellt wird, wobei Material aus dem Regal entnommen wird.

**Aus der** CN 106 625 210 A **ist eine Grundplatte mit Schrägung bekannt.** Die CN 106 625 210 A offenbart die Merkmale des Oberbegriffs des Anspruchs 1.

**Aus der** US 2002/170885 A1 **ist ein Verfahren für elektrische Entlademaschine bekannt.**

**Aus der** DE 298 17 895 U1 **ist eine Arbeitsstation zur Eingliederung in eine mit Industrie-Robotern bestückte Fertigungslinie bekannt.**

**Aus der** JP H07 11840 A **ist eine Schrägung zwischen Böden mit unterschiedlichen Ebenen bekannt.**

**Aus der** DE 10 2014 017544 A1 **ist ein Verfahren zum induktiven Übertragen von elektrischer Energie an ein Fahrzeug bekannt.**

**Aus der** WO 2017 1182132 A1 **ist ein Verfahren zum Herstellen in einer Fertigungszelle einer Fertigungsanlage bekannt.**

**Aus der** DE 10 2016 003665 A1 **ist ein Verfahren zum Betreiben eines Lagersystems mit einem Fahrzeug bekannt.**

**Aus der** DE 10 2011 014887 A1 **ist eine Anlage mit einem stationären Teil bekannt.**

**Aus der** DE 10 2015 016682 A1 **ist ein System zur induktiven Übertragung elektrischer Leistung an Fahrzeuge bekannt.**

**Aus der** DE 10 2011 109531 A1 **ist ein Verfahren zum Betreiben einer Anlage bekannt.**

**Aus der** DE 21 2005 000 023 U1 **ist ein mobiles PVD/CVD-Beschichtungszentrum bekannt.**

**Aus der** DE 10 2010 021 864 A1 **ist eine Lagervorrichtung bekannt.**

**Aus der** DE 10 2013 019 368 A1 **ist ein Verfahren zur weitgehend maschinellen**

**Zusammenstellung von Warenlieferungen in Lagerhallen bekannt.**

**Aus der** DE 691 02 033 T2 **ist eien Fertigungsanlage für verschiedene Produkte bekannt.**

Der Erfindung liegt daher die Aufgabe zugrunde, eine Fertigung flexibel weiterzubilden.

Erfindungsgemäß wird die Aufgabe bei der Anlage nach den in Anspruch 1 angegebenen Merkmalen gelöst.

Vorteilhafte Ausgestaltungen der Anlage sind in den Unteransprüchen angegeben.

Wichtige Merkmale der Erfindung bei der Anlage sind, dass die Anlage ein Gebäude mit Hallenboden aufweist, wobei auf dem Hallenboden ein Produktionsmodul, insbesondere zum Herstellen und/oder Bearbeiten eines Produktes, angeordnet ist,
wobei das Produktionsmodul eine Grundplatte aufweist, auf ein Aufbau angeordnet ist,
insbesondere ein Regal angeordnet ist,
wobei zumindest ein Teilbereich des äußeren Randbereichs der Grundplatte eine Schrägung insbesondere zum Hallenboden hin, aufweist,
**insbesondere wobei der Schrägungswinkel der Schrägung derart klein, aber nicht verschwindend ist, dass die Ausbildung einer Stolperfalle durch den Teilbereich oder durch den äußeren Randbereich verhindert ist.**

Von Vorteil ist dabei, dass das Produktionsmodul in einfacher Weise an einer Stelle positionierbar, also bewegbar angeordnet ist. zum Bewegen sind Transporthilfen verwendbar, wie Rolleneinheiten, mit welchen Grundplatte aufnehmbar ist und somit das Produktionsmodul innerhalb der Anlage an unterschiedlichen Positionen anordenbar ist.

Auf diese Weise ist eine flexible Fertigung in einfacher Weise erreichbar. Beispielsweise wird in einem ersten Zeitabschnitt, insbesondere in einer ersten Arbeitswoche, das Produktionsmodul als Teil einer Produktionslinie an einem ersten Ort aufgestellt und für einen nachfolgenden zweiten Zeitabschnitt an einem anderen Ort aufgestellt, so dass eine veränderte Produktionslinie verwirklichbar ist. Dabei wird in einem ersten Zeitabschnitt ein erstes Produkt gefertigt und in einem zweiten Zeitabschnitt ein zweites Produkt.

Bei einer vorteilhaften Ausgestaltung ist die Grundplatte auf dem Hallenboden angeordnet. Von Vorteil ist dabei, dass der Boden aus hartem Material, wie Beton herstellbar ist. Denn die Herstellung des Produktes, also auch der Arbeitsplatz für einen Werker, ist im Wesentlichen auf dem Produktionsmodul angeordnet. Gummi-Fußmatten zur Bewirkung eines weicheren Arbeitsplatzes sind also verzichtbar. Denn die Grundplatte ist aus einem im Vergleich zu Beton oder Estrich weicheren Material gefertigt und daher für lange währenden Arbeitseinsatz von Menschen vorteilhaft geeignet.

Bei einer vorteilhaften Ausgestaltung ist die Grundplatte aus Holz oder Kunststoff ausgeführt. Von Vorteil ist dabei, dass die Grundplatte einerseits einen weichen Fußboden darstellt und andererseits die von einem Primärleiter erzeugten Magnetfelder nicht stört, welche zur induktiven Übertragung von Energie an ein Mobilteil vorgesehen sind.

Bei einer vorteilhaften Ausgestaltung weist die Grundplatte im Bereich der Schrägung eine nach außen abnehmende Wandstärke auf, insbesondere wobei die Ableitung des Verlaufs des Wandstärkewertes als Funktion des Abstandes von der äußeren Berandung ein lokales Maximum aufweist und wobei der Verlauf des Wandstärkewertes stetig differenzierbar ist.

Von Vorteil ist dabei, dass keine Stolperfalle ausgebildet ist sondern ein stetiger glatter Übergang vom Hallenboden zur Arbeitsfläche auf der Grundplatte ausgebildet ist.

**Erfindungsgemäß** ist in der Grundplatte ein als Primärleiter fungierender langgestreckter Linienleiter aufgenommen. Von Vorteil ist dabei, dass entlang einer Fahrbahn einem Mobilteil Energie induktiv zur Verfügung stellbar ist. Somit ist ein Aufladen eines Energiespeichers des Mobilteils während des Aufenthalts im Produktionsmodul ermöglicht, so dass das Mobilteil auch ohne induktive Versorgung, also nach Verlassen des Produktionsmoduls, bewegbar ist, wobei dann die Energieversorgung aus dem Energiespeicher erfolgt.

**Erfindungsgemäß** weist das Produktionsmodul ein Einspeisegerät auf, welches einen Wechselstrom in einen oder den Primärleiter einprägt,
insbesondere wobei die Frequenz des Wechselstroms zwischen 10 und 1000 MHz beträgt. Von Vorteil ist dabei, dass mehrere Mobilteile parallel induktiv versorgbar sind. Denn alle Mobilteile, die sich mit ihrer Sekundärwicklung über dem Primärleiter aufhalten, sind induktiv mit Energie versorgbar. Da ein Wechselstrom eingeprägt wird, also der Primärleiter von einer Stromquelle, gespeist wird, ist auch bei mehreren Mobilteilen die jeweils benötigte Leistung entnehmbar, ohne dass die Leistungsübertragung an die anderen Mobilteile vermindert wäre.

Bei einer vorteilhaften Ausgestaltung ist der Primärleiter W-förmig verlegt,
insbesondere wobei ein erster Schenkel des W an einem Regal entlanggeführt ist, insbesondere wobei ein zweiter Schenkel des W an einem zweiten Regal entlanggeführt ist, insbesondere wobei ein dritter Schenkel an einer Außenseite des Produktionsmoduls entlanggeführt ist. Von Vorteil ist dabei, dass ein erster Schenkel zum Bewegen entlang eines Regals vorgesehen ist und somit eine induktive Versorgung während der zugehörigen Herstellschritte zur Herstellung des Produkts ermöglicht ist. Ebenso ist am zweiten Schenkel eine Herstellung ermöglicht, während dessen induktiv Energie zuführbar ist. Der dritte Schenkel dient zum Ausfahren eines Mobilteils und ermöglicht ein Aufladen des Energiespeichers des Mobilteils. Insbesondere ist es sogar ermöglicht, dass das Mobilteil sich entlang des dritten Schenkels viel langsamer und/oder sogar mit Stillstandzeiten bewegt und somit ein Beladen des Energiespeichers des Mobilteils ermöglicht ist, bevor das Mobilteil das Produktionsmodul verlässt und den Hallenboden befährt, welcher keine Primärleiter aufweist.
**Erfindungsgemäß** ist der Primärleiter in einer Nut, insbesondere in einer in die Grundplatte eingefrästen Nut, der Grundplatte aufgenommen. Von Vorteil ist dabei, dass eine einfache Verlegung des Primärleiters ermöglicht ist und eine Begehbarkeit bewirkbar ist.

Bei einer vorteilhaften Ausgestaltung ist in einer weiteren Nut, welche vom äußeren Rand zum Einspeisegerät sich erstreckt, ein Versorgungskabel aufgenommen. Von Vorteil ist dabei, dass ein Versorgungskabel von außen zum Einspeisegerät geschützt zuführbar ist.

Bei einer vorteilhaften Ausgestaltung ist das jeweilige Regal aus Metall, insbesondere Stahl oder Aluminium, gefertigt. Von Vorteil ist dabei, dass Wärme gut ableitbar ist und außerdem eine hohe Stabilität vorhanden ist, also auch schweres Material aufnehmbar ist.

Bei einer vorteilhaften Ausgestaltung ist das Einspeisegerät mit dem Regal wärmeleitend und mechanisch verbunden,
wobei der vom Einspeisegerät, insbesondere der von Leistungshalbleiters des Einspeisegeräts, erzeugte Wärmestrom, insbesondere Verlustwärmestrom, vom Regal aufgespreizt wird, insbesondere so, dass das Regal als Kühlkörper für das Einspeisegerät fungiert. Von Vorteil ist dabei, dass die Verlustwärme der steuerbaren Leistungshalbleiter des Einspeisegeräts mittels des Regals abführbar ist.

Bei einer vorteilhaften Ausgestaltung ist am Produktionsmodul ein derart geeignet ausgeführter Transceiver angeordnet, welcher einen optischen bidirektionalen Datenaustausch ermöglicht, insbesondere mit einem an der Innenseite der Decke des Gebäudes angeordneten steuerbaren Leuchtmittel, welches an einem Haltemittel befestigt ist, an welchem auch ein lichtempfindlicher Sensor befestigt und/oder angeordnet ist,
wobei der Transceiver und das Einspeisegerät mittels eines Datenbusses und/oder mittels einer Datenaustauschverbindung zum Datenaustausch miteinander verbunden sind. Von Vorteil ist dabei, dass eine Datenübertragung realisierbar ist und somit Informationen zwischen dem Produktionsmodul und anderen Produktionsmodulen oder einer zentralen Steuerung austauschbar sind.

Bei einer vorteilhaften Ausgestaltung weist die Anlage weitere Produktionsmodule auf. Von Vorteil ist dabei, dass ein komplexes Herstellverfahren ausführbar ist, wobei in einem ersten Produktionsmodul erste Herstellschritte ausführbar sind und in einem zweiten Produktionsmodul zweite Herstellschritte.

Weitere Vorteile ergeben sich aus den Unteransprüchen.

Die Erfindung wird nun anhand von schematischen Abbildungen näher erläutert:

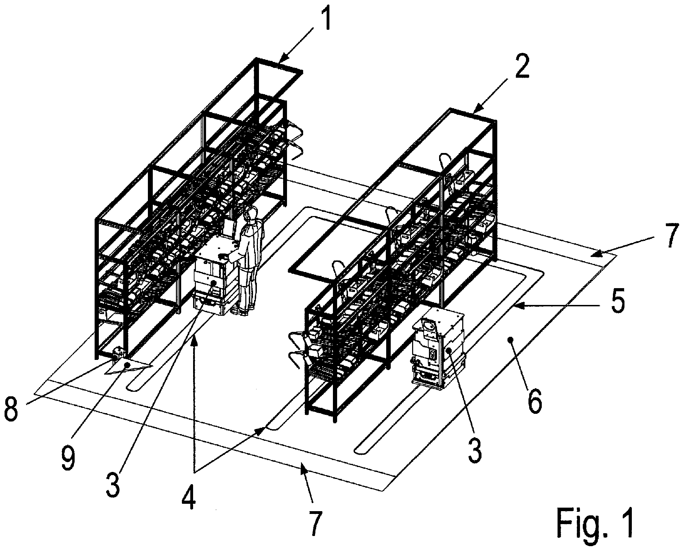

In der Figur 1 ist ein erfindungsgemäßes Produktionsmodul in Schrägansicht dargestellt.

Wie in der Figur dargestellt, weist das Produktionsmodul eine rechteckförmige Grundplatte 6 auf, die an ihrer vorderen und hinteren Seite eine Abschrägung aufweist. Somit ist die Ausbildung einer Stolperfalle vermieden.

Das Produktionsmodul wird in einem Gebäude, wie beispielsweise Fertigungshalle, auf dem Boden, insbesondere Hallenboden, aufgestellt.

Somit muss das Gebäude keine aufwendige Infrastruktur zur Verfügung stellen. Es genügt, wenn eine Stromversorgung vorhanden ist, also beispielsweise Steckdose an einer Wand oder Tragsäule des Gebäudes. Außerdem sind vorteilhafter Weise Leuchtmittel an der Decke des Gebäudes und/oder an den Tragsäulen angebracht.

In der Grundplatte 6 sind Kabel verlegt. Hierzu ist nicht nur eine Versorgungsleitung verlegt, sondern auch ein Primärleiter. Der Primärleiter ist entlang einer für ein Mobilteil 3 vorgesehenen Fahrspur verlegt.

In Figur ist der Primärleiter W-förmig verlegt, wobei die beiden ersten Schenkel des W als erster Primärleiterabschnitt 4 fungieren, der die Versorgung des Mobilteils 3 während des Bewegens entlang eines ersten und zweiten Regals (1, 2) ausführt, fungiert der äußere dritte Schenkel des W als zweiter Primärleiterabschnitt 4, der zur Rückführung des Mobilteils 3 dient.

Der Primärleiter ist als langgestreckt verlegter Linienleiter vorgesehen und wird von einem Einspeisegerät mit einem Wechselstrom beaufschlagt, dessen Frequenz zwischen 10 und 1000 MHz liegt. An der Unterseite des Mobilteils 3 ist eine Sekundärwicklung angeordnet, welche den Energiespeicher und/oder den Antrieb des Mobilteils 3 speist. Der Sekundärwicklung ist eine Kapazität parallel oder in Reihe zugeschaltet, so dass die Resonanzfrequenz des so gebildeten Schwingkreises der Frequenz des vom Einspeisegerät in den Primärleiter eingeprägten Wechselstroms gleicht.

Außer des Einspeisegeräts ist auch ein Transceiver 8 an der Grundplatte 6 angeordnet, welcher optischen Datenaustausch ermöglicht. Hierzu weist der beim Senden als Sender fungierende Transceiver 8 einen Lichtkegel 9 beim Senden auf, wobei in dem vom Lichtkegel 9 ausgeleuchteten Raumbereich ein entsprechender Empfänger angeordnet ist.

Hierbei ist als Empfänger entweder der Transceiver eines anderen Produktionsmoduls verwendbar, so dass die Produktionsmodule untereinander Informationen austauschen, oder als Empfänger ist an einem steuerbaren Leuchtmittel ein Lichtsensor integriert angeordnet.

Somit ist ein Datenaustausch zwischen dem Produktionsmodul und einer zentralen Steuerung ermöglicht.

Außerdem ist eine bidirektionale Datenübertragung zwischen dem Produktionsmodul und dem Mobilteil realisierbar, indem Daten als höher frequente Stromanteile auf den Primärleiter oder die Sekundärwicklung aufmoduliert werden, so dass die bidirektionale Datenübertragung über die induktive Kopplung ausführbar ist.

Die Grundplatte 1 ist vorzugsweise aus Holz oder Kunststoff erstellt. Die mit ihr verbundenen Regale sind vorzugsweise aus Stahl oder Aluminium ausgeführt. Die Regale weisen Materialbereitstellungsplätze auf, wobei die Regale 1 und 2 von einer ersten Seite aus befüllbar und von der hierzu gegenüberliegenden Seite sind Materialteile entnehmbar und auf der Oberseite des Mobilteils 3 ablegbar. Die Oberseite des Mobilteils 3 ist von einem im Mobilteil 3 integriert angeordneten Hubwerk höhenverstellbar.

Somit ist auf der Oberseite des Mobilteils 3 aus Teilen ein Produkt herstellbar.

Statt der Regale 1 und 2 sind auch andersartige Aufbauten auf der Grundplatte 6 aufbaubar.

### Bezugszeichenliste

1 Aufbau, insbesondere Regal mit Materialbereitstellungsplätzen
2 Aufbau, insbesondere Regal mit Materialbereitstellungsplätzen
3 Mobilteil
4 erster Primärleiterabschnitt
5 zweiter Primärleiteranschnitt
6 Grundplatte
7 Schräge, insbesondere Schrägungsfläche
8 optischer Transceiver
9 Lichtkegel

## Patentansprüche

1. Anlage, aufweisend ein Gebäude mit Hallenboden,
**wobei** auf dem Hallenboden ein Produktionsmodul, insbesondere zum Herstellen und/oder Bearbeiten eines Produktes, angeordnet ist,
wobei das Produktionsmodul eine Grundplatte (6) aufweist, auf ein Aufbau (1, 2) angeordnet ist, insbesondere ein Regal angeordnet ist,
wobei zumindest ein Teilbereich des äußeren Randbereichs der Grundplatte (6) eine Schrägung insbesondere zum Hallenboden hin, aufweist,
**insbesondere wobei der Schrägungswinkel der Schrägung derart klein ist, dass die Ausbildung einer Stolperfalle durch den Teilbereich oder durch den äußeren Randbereich verhindert ist,**
**dadurch gekennzeichnet, dass**
**in der Grundplatte (6) ein als Primärleiter fungierender langgestreckter Linienleiter aufgenommen ist,**
**das Produktionsmodul ein Einspeisegerät aufweist, welches einen Wechselstrom in einen oder den Primärleiter einprägt,**
**der Primärleiter in einer Nut, insbesondere in einer in die Grundplatte (6) eingefrästen Nut, der Grundplatte (6) aufgenommen ist.**

2. Anlage nach Anspruch 1,
**dadurch gekennzeichnet, dass**
die Grundplatte (6) auf dem Hallenboden angeordnet ist.

3. Anlage nach einem der vorangegangenen Ansprüche,
**dadurch gekennzeichnet, dass**
die Grundplatte (6) aus Holz oder Kunststoff ausgeführt ist.

4. Anlage nach einem der vorangegangenen Ansprüche,
**dadurch gekennzeichnet, dass**
die Grundplatte (6) im Bereich der Schrägung eine nach außen abnehmende Wandstärke aufweist, insbesondere wobei die Ableitung des Verlaufs des Wandstärkewertes als Funktion des Abstandes von der äußeren Berandung ein lokales Maximum aufweist und wobei der Verlauf des Wandstärkewertes stetig differenzierbar ist.

5. Anlage nach einem der vorangegangenen Ansprüche,
**dadurch gekennzeichnet, dass**
**die Frequenz des Wechselstroms zwischen 10 und 1000 MHz beträgt.**

6. Anlage nach einem der vorangegangenen Ansprüche,
**dadurch gekennzeichnet, dass**
der Primärleiter W-förmig verlegt ist,
insbesondere wobei ein erster Schenkel des W an einem Regal entlanggeführt ist, insbesondere wobei ein zweiter Schenkel des W an einem zweiten Regal entlanggeführt ist, insbesondere wobei ein dritter Schenkel an einer Außenseite des Produktionsmoduls entlanggeführt ist.

7. Anlage nach einem der vorangegangenen Ansprüche,
**dadurch gekennzeichnet, dass**
in einer weiteren Nut, welche vom äußeren Rand zum Einspeisegerät sich erstreckt, ein Versorgungskabel aufgenommen ist.

8. Anlage nach einem der vorangegangenen Ansprüche,
**dadurch gekennzeichnet, dass**
das jeweilige Regal aus Metall, insbesondere Stahl oder Aluminium, gefertigt ist.

9. Anlage nach dem vorangegangenen Anspruch,
**dadurch gekennzeichnet, dass**
das Einspeisegerät mit dem Regal wärmeleitend und mechanisch verbunden ist,
wobei der vom Einspeisegerät, insbesondere der von Leistungshalbleiters des Einspeisegeräts, erzeugte Wärmestrom, insbesondere Verlustwärmestrom, vom Regal aufgespreizt wird, insbesondere so, dass das Regal als Kühlkörper für das Einspeisegerät fungiert.

10. Anlage nach einem der vorangegangenen Ansprüche,
**dadurch gekennzeichnet, dass**
am Produktionsmodul ein derart geeignet ausgeführter Transceiver (8) angeordnet ist, welcher einen optischen bidirektionalen Datenaustausch ermöglicht, insbesondere mit einem an der Innenseite Decke des Gebäudes angeordneten steuerbaren Leuchtmittel, welches an einem Haltemittel befestigt ist, an welchem auch ein lichtempfindlicher Sensor befestigt und/oder angeordnet ist,
wobei der Transceiver (8) und das Einspeisegerät mittels eines Datenbusses und/oder mittels einer Datenaustauschverbindung zum Datenaustausch miteinander verbunden sind.

11. Anlage nach einem der vorangegangenen Ansprüche,
**dadurch gekennzeichnet, dass**
die Anlage weitere Produktionsmodule aufweist.

## Claims

1. Facility comprising a building having a hall floor,
a production module, in particular for manufacturing and/or working on a product, being arranged on the hall floor,
the production module comprising a base plate (6), on which a structure (1, 2), in particular a rack, is arranged,
at least one portion of the outer edge region of the base plate (6) comprising a bevel, in particular towards the hall floor,
the bevel angle of the bevel in particular being so small as to prevent the portion or the outer edge region from forming a trip hazard,
**characterised in that**
an elongate line conductor acting as a primary conductor is received in the base plate (6), the production module comprises a feed device which impresses an alternating current onto a or the primary conductor,
the primary conductor is received in a groove in the base plate (6), in particular in a groove milled into the base plate (6).

2. Facility according to claim 1,
**characterised in that**
the base plate (6) is arranged on the hall floor.

3. Facility according to any of the preceding claims,
**characterised in that**
the base plate (6) is made of wood or plastics material.

4. Facility according to any of the preceding claims,
**characterised in that**
in the region of the bevel, the base plate (6) has a wall thickness that decreases towards the exterior, the derivation of the curve of the wall thickness value as a function of the distance from the outer boundary in particular having a local maximum, and the curve of the wall thickness value being continuously differentiable.

5. Facility according to any of the preceding claims,
**characterised in that**
the frequency of the alternating current is between 10 and 1000 MHz.

6. Facility according to any of the preceding claims,
**characterised in that**
the primary conductor is installed in a W shape,
a first leg of the W being guided alongside a rack,
a second leg of the W being guided alongside a second rack,
a third leg being guided along an outer side of the production module.

7. Facility according to any of the preceding claims,
**characterised in that**
a power supply cable is received in a further groove that extends from the outer edge to the feed device,

8. Facility according to any of the preceding claims,
**characterised in that**
each rack is made of metal, in particular of steel or aluminium.

9. Facility according to the preceding claim,
**characterised in that**
the feed device is connected to the rack in a heat-conducting and mechanical manner,
the heat flow, in particular the heat loss flow, generated by the feed device, in particular by power semiconductors of the feed device, being spread out by the rack, in particular such that the rack acts as a cooling member for the feed device.

10. Facility according to any of the preceding claims,
**characterised in that**
on the production module there is arranged a suitably configured transceiver (8) which enables optical bidirectional exchange of data, in particular with a controllable lamp that is arranged on the inside of the ceiling of the building and fastened to a retaining means, to and/or on which a light-sensitive sensor is fastened and/or arranged,
the transceiver (8) and the feed device being connected to one another for data exchange by means of a data bus and/or by means of a data exchange link.

11. Facility according to any of the preceding claims,
**characterised in that**
the facility comprises further production modules.

## Revendications

1. Installation comportant un bâtiment muni d'un sol de halle,
un module de production, notamment dévolu à la fabrication et/ou au traitement d'un produit, étant implanté sur le sol de la halle,
lequel module de production est pourvu d'une plaque d'embase (6) sur laquelle se trouve une structure (1, 2), en particulier un rayonnage,
au moins une zone partielle de la région marginale extérieure de ladite plaque d'embase (6) étant dotée d'un biseau notamment orienté vers le sol de la halle,
sachant, en particulier, que l'angle d'inclinaison dudit biseau présente un faible dimensionnement propre à prévenir la création d'une embûche, propice au trébuchement, provoquée par ladite zone partielle ou par ladite région marginale extérieure, **caractérisée par le fait**
**qu'**une ligne conductrice de forme allongée, remplissant la fonction d'un conducteur primaire, est intégrée dans la plaque d'embase (6),
le module de production étant pourvu d'un appareil d'alimentation qui injecte un courant alternatif dans un, ou dans ledit conducteur primaire,
lequel conducteur primaire est logé dans une rainure de la plaque d'embase (6), notamment dans une rainure fraisée dans ladite plaque d'embase (6).

2. Installation selon la revendication 1,
**caractérisée par le fait que**
la plaque d'embase (6) est disposée sur le sol de la halle.

3. Installation selon l'une des revendications précédentes,
**caractérisée par le fait que**
la plaque d'embase (6) est réalisée en bois ou en matière plastique.

4. Installation selon l'une des revendications précédentes,
**caractérisée par le fait que**
la plaque d'embase (6) possède une épaisseur de paroi décroissant vers l'extérieur dans la région du biseau, sachant notamment que la dérivée de l'allure de la valeur de ladite épaisseur de paroi présente un maximum localisé, en fonction de la distance par rapport à la bordure extérieure, et sachant que ladite allure de la valeur de l'épaisseur de paroi est différenciable de manière permanente.

5. Installation selon l'une des revendications précédentes,
**caractérisée par le fait que**
la fréquence du courant alternatif est comprise entre 10 et 1 000 MHz.

6. Installation selon l'une des revendications précédentes,
**caractérisée par le fait que**
le conducteur primaire est posé suivant une configuration en W,
sachant notamment qu'une première branche du W est guidée le long d'un rayonnage, une deuxième branche du W étant notamment guidée le long d'un second rayonnage, une troisième branche du W étant guidée, en particulier, le long d'une face extérieure du module de production.

7. Installation selon l'une des revendications précédentes,
**caractérisée par le fait**
**qu'**un câble d'approvisionnement est logé dans une rainure additionnelle s'étendant vers l'appareil d'alimentation à partir du bord extérieur.

8. Installation selon l'une des revendications précédentes,
**caractérisée par le fait que**
le rayonnage considéré est fabriqué en métal, notamment en acier ou en aluminium.

9. Installation selon la revendication précédente,
**caractérisée par le fait que**
l'appareil d'alimentation est relié au rayonnage avec conduction thermique et par voie mécanique,
sachant que le flux de chaleur, en particulier le flux de chaleur perdue engendré par ledit appareil d'alimentation, notamment par le semi-conducteur de puissance dudit appareil d'alimentation, est dispersé par ledit rayonnage, notamment de façon telle que ledit rayonnage remplisse la fonction d'un corps de refroidissement dédié audit appareil d'alimentation.

10. Installation selon l'une des revendications précédentes,
**caractérisée par le fait**
**qu'**un émetteur-récepteur (8) de réalisation adéquate, implanté sur le module de production, permet un échange de données optique bidirectionnel, notamment avec un moyen d'éclairage pilotable placé à la face intérieure du plafond du bâtiment, fixé à un moyen de retenue sur lequel un capteur photosensible est pareillement fixé et/ou implanté, sachant que ledit émetteur-récepteur (8) et l'appareil d'alimentation sont raccordés l'un à l'autre, en vue de l'échange de données, au moyen d'un bus de données et/ou au moyen d'une connexion d'échange de données.

11. Installation selon l'une des revendications précédentes,
**caractérisée par le fait que**
ladite installation comprend des modules de production additionnels.
